# EUROPEAN PATENT APPLICATION

(11) **EP 4 738 495 A1**
(43) Date of publication of application: **06.05.2026**
(21) Application number: 24830854.6
(22) Date of filing: 27.06.2024
(51) Int. Cl.: H01M 10/04, H01M 10/0525, H01M 10/0587

(54) **SECONDARY BATTERY AND ELECTRONIC DEVICE**

(30) Priority: 30.06.2023 CN 202310796380
(71) Applicant: Ningde Amperex Technology Limited, Ningde, Fujian 352100 (CN)
(72) Inventor: TAN, Kang, Ningde, Fujian 352100 (CN); TANG, Xuqing, Ningde, Fujian 352100 (CN); LI, Sheng, Ningde, Fujian 352100 (CN)
(74) Representative: Dehns Germany Partnerschaft mbB
(86) International application number: PCT/CN2024/101861
(87) International publication number: WO 2025/002220

(57) **Abstract**

This application discloses a secondary battery and an electronic device, including a housing, an electrode assembly, a first adhesive member, and a second adhesive member. The electrode assembly is disposed within the housing, and the electrode assembly includes a first electrode plate, a separator, and a second electrode plate that are stacked and wound. The first electrode plate includes a first segment, the first segment constitutes an outermost portion of the electrode assembly, and the first segment has a first surface facing a winding central axis and a second surface facing away from the winding central axis. Along the winding direction of the first segment, the first segment includes a terminating segment, where a first surface and a second surface of the terminating segment are blank foil regions. At least part of the first adhesive member is bonded to the first surface of the terminating segment. The second adhesive member is disposed on the second surface of the terminating segment and bonds the second surface of the terminating segment to the housing. Along a direction perpendicular to the first surface, a projection of the second adhesive member partially overlaps a projection of the first adhesive member. For the secondary battery of this application, a risk of failure due to dropping or collision is reduced.

## Description

### CROSS-REFERENCE TO RELATED APPLICATIONS

This application claims priority to Chinese Patent Application No. 202310796380.3, entitled "Secondary Battery and Electronic Device", filed with the China Patent Office on June 30, 2023, which is incorporated herein by reference in its entirety.

### TECHNICAL FIELD

The embodiments of this application relate to the field of electrochemical technology, and in particular, to a secondary battery and an electronic device.

### BACKGROUND

With the development of technology, consumer electronic products such as mobile phones and notebook computers have gained widespread popularity. As a core component of electronic devices, secondary batteries (lithium-ion batteries) have become a critical factor in the advancement of electronic products due to their advantages such as high operating voltage and long service life.

A lithium-ion battery typically includes a housing and an electrode assembly. To reduce a risk of failure of the lithium-ion battery due to dropping, the commonly adopted practice is to bond the electrode assembly to the housing using an adhesive, thereby minimizing relative movement between the electrode assembly and the housing, so as to reduce collision-induced failures between the electrode assembly and the housing.

However, for the outermost electrode plate of the electrode assembly, there remains a risk of tearing electrode plate at the joint between the adhesive-covered and non-covered regions. Moreover, in a case of adhesive terminating, an ending of the electrode plate remains in a semi-constrained state, which can easily lead to tearing of the electrode plate during the drop of a lithium-ion battery, resulting in the failure of the lithium-ion battery.

### SUMMARY

Embodiments of this application aim to provide a secondary battery and an electronic device to address an issue of an outermost electrode plate being prone to tearing, thereby reducing a failure risk of a lithium-ion battery.

In order to resolve technical problems, the following technical solutions are used in embodiments of this application.

This application discloses a secondary battery, including a housing, an electrode assembly, a first adhesive member, and a second adhesive member. The electrode assembly is disposed within the housing, the electrode assembly includes a first electrode plate, a second electrode plate, and a separator located between the first electrode plate and the second electrode plate, where the first electrode plate, the second electrode plate, and the separator are stacked and wound, and a direction of a winding central axis of the electrode assembly is a first direction. The first electrode plate includes a first segment, the first segment constitutes an outermost part of the electrode assembly, and the first segment has a first surface facing the winding central axis and a second surface facing away from the winding central axis. Along a winding direction of the first segment, the first segment includes a terminating segment, where both a first surface and a second surface of the terminating segment are blank foil regions. The first adhesive member is at least partially bonded to the first surface of the terminating segment. The second adhesive member is disposed on the second surface of the terminating segment and bonds the second surface of the terminating segment to the housing, where along a direction perpendicular to the first surface, the second adhesive member partially overlaps the first adhesive member.

In the above-mentioned technical solution, the first adhesive member being at least partially bonded to the first surface of the terminating segment may enhance the tensile strength of the terminating segment, thereby reducing a risk of tearing in the terminating segment. The second adhesive member is disposed on the second surface of the terminating segment and bonds the terminating segment to the housing, thereby reducing relative movement between the electrode assembly and the housing and increasing the tensile strength of the terminating segment again, thus further lowering the risk of tearing in the terminating segment. Meanwhile, along the direction perpendicular to the first surface, a projection of the second adhesive member partially overlaps a projection of the first adhesive member. When the secondary battery drops or collides, it is allowed that part of the shear force on the second adhesive member to be transmitted to the first adhesive member, thereby reducing shear force concentration and further lowering the risk of tearing at the terminating segment.

In some preferred embodiments, the overlapped portion between the second adhesive member and the first adhesive member serves as a first portion. Along the direction perpendicular to the first surface, a projection of the first portion falls within the projection of the first adhesive member. The transmission of a shear force between the first adhesive member and the second adhesive member may effectively reduce the risk of tearing at the terminating segment.

In some preferred embodiments, an area of the first portion is S1, an area of the second adhesive member is S2, and 15% ≤ S1 / S2 ≤ 50%. Sufficient adhesive bonding area of the second adhesive member may enhance the tensile strength of the terminating segment on one hand, and can ensure adequate overlap area between the second adhesive member and the first adhesive member for shear force transmission on the other hand, thereby reducing the risk of terminating segment tearing.

In some preferred embodiments, along the winding direction of the first segment, a distance between the first adhesive member and an end of the terminating segment is a first distance, and the first distance is greater than or equal to 2 mm. Reserving the first distance may allow the first adhesive member to be fully bonded to the terminating segment, effectively minimizing curling of the first adhesive member.

In some preferred embodiments, the first segment further includes a coating segment connected to the terminating segment.

In some preferred embodiments, one end of the first adhesive member is bonded to the coating segment, the other end thereof is bonded to the terminating segment, and the first adhesive member covers a junction between the coating segment and the terminating segment. Along the first direction, a length of the first adhesive member is L1 mm, a length of the first segment is L2 mm, and 0 ≤ L1 - L2 ≤ 3. The first direction is parallel to the winding central axis direction of the electrode assembly. This may reduce the risk of raised structures such as burrs piercing the separator, thereby lowering the short circuit risk, and can also reduce powder shedding of the active material layer at the joint.

In some preferred embodiments, the first adhesive member includes a first sub-adhesive member and a second sub-adhesive member. The first sub-adhesive member is disposed on the first surface. The second sub-adhesive member is disposed on the first surface, where the second sub-adhesive member is bonded to the first sub-adhesive member at the terminating segment, and a projection of the second sub-adhesive member on the second surface along a direction perpendicular to the first surface partially overlaps the second adhesive member.

In some preferred embodiments, one end of the first sub-adhesive member is bonded to the coating segment, the other end thereof is bonded to the terminating segment, and the first sub-adhesive member covers the junction between the coating segment and the terminating segment. Along the first direction, a length of the first sub-adhesive member is L3 mm, the length of the first segment is L2 mm, and 0 ≤ L3 - L2 ≤ 3. The first sub-adhesive member fully covers the joint along the first direction X to further reduce the risk of raised structures such as burrs piercing the separator, thereby lowering the risk of short circuits, and also reduce powder shedding of the active material layer at the joint.

In some preferred embodiments, the first adhesive member includes a plurality of second sub-adhesive members. The plurality of second sub-adhesive members are sequentially arranged on the first surface along the winding direction of the first segment, and adjacent second sub-adhesive members are bonded to each other. Along the winding direction of the first segment, the second sub-adhesive member at an arrangement starting end is bonded to the first sub-adhesive member on the terminating segment, and along the direction perpendicular to the first surface, the projection of the second sub-adhesive member at an arrangement terminal end partially overlaps the projection of the second adhesive member. The structural arrangement of the plurality of sub-adhesive members may further reduce bubble formation during bonding and minimize shear force concentration, thereby lowering the risk of terminating segment tearing.

In some preferred embodiments, the first adhesive member and the second adhesive member are adhesive tapes, thereby being conducive to taping steps of the first adhesive member and the second adhesive member, further improving production efficiency.

In some preferred embodiments, the first segment includes a first straight segment, a first curved segment, a second straight segment, and a second curved segment that are connected. The first straight segment and the second straight segment are oppositely arranged in a second direction, the first curved segment and the second curved segment are both connected between the first straight segment and the second straight segment, and the first curved segment and the second curved segment are oppositely arranged in a third direction. The second adhesive member is disposed on the first straight segment or the second straight segment, and the first direction, the second direction, and the third direction are mutually perpendicular to each other. The straight segment is more conducive to bonding and terminating the second adhesive member, facilitating bonding and improving the bonding effect, thereby conducive to enhancing the tensile strength of the first segment and reducing the risk of tearing the first segment.

In some preferred embodiments, the peel strength between the separator and the first electrode plate or the second electrode plate is 8 N/m to 12 N/m, thereby effectively ensuring the overall bonding strength of the electrode assembly.

In some preferred embodiments, the first adhesive member is a single-sided adhesive tape with only one side being adhesive, and the single-sided adhesive tape includes a first substrate layer and a first binder layer coated on one side of the first substrate layer.

In some preferred embodiments, the second adhesive member is a double-sided adhesive tape with both sides being adhesive, the double-sided adhesive tape includes a second substrate layer and second bonding layers and/or hot melt adhesive layers coated on both sides of the second substrate layer.

In some preferred embodiments, the housing is a packaging bag.

In some preferred embodiments, the first electrode plate is a cathode electrode plate, and the second electrode plate is an anode electrode plate; only the first surface of the first segment is provided with an active material layer, and the active material layer is disposed on the first surface of the coating segment. Since there is no corresponding anode electrode plate on an outer side of the single-sided cathode electrode plate, one layer of active material layer can be reduced, which is conducive to improving the energy density of the secondary battery.

In some preferred embodiments, the second adhesive member is used for fixing the terminating segment. By directly fixing the terminating segment to the second adhesive member, one termination adhesive and the bonding termination step can be eliminated, achieving the purpose of cost reduction and efficiency improvement while reducing the risk of terminating segment tearing.

In a second aspect, this application further proposes an electronic device including the secondary battery according to any one of the above embodiments.

The above description is only an overview of the technical solutions of this application, in order to be able to more clearly understand the technical means of this application, the technical solutions may be implemented in accordance with the contents of the specification, and in order to make the above and other objectives, features and advantages of this application more apparent and understandable, the specific implementations of this application are thereby listed.

### BRIEF DESCRIPTION OF DRAWINGS

One or more embodiments are exemplarily illustrated by accompanying drawings corresponding thereto. These exemplary illustrations do not constitute a limitation on the embodiments. Components with same reference numerals in the accompanying drawings are represented as similar components. Unless otherwise stated, the figures in the accompanying drawings do not constitute a scale limitation.
FIG. 1 is an exploded view of a secondary battery according to some embodiment of this application.
FIG. 2 is a schematic diagram of a jelly-roll structure of an electrode assembly according to some embodiment of this application.
FIG. 3a is a schematic diagram of a stacked structure of a first electrode plate, a separator, and a second electrode plate according to some embodiment of this application.
FIG. 3b is a schematic diagram of a structure of the separator according to some embodiment of this application.
FIG. 4 is a schematic diagram of an bonding structure of a first segment with a first adhesive member and a second adhesive member (viewed along the X direction) according to some embodiment of this application.
FIG. 5a is a schematic diagram of the bonding structure of the first segment with the first adhesive member and the second adhesive member (viewed along the M direction) according to some embodiment of this application.
FIG. 5b is a schematic diagram of structures of the first adhesive member and the second adhesive member according to some embodiment of this application.
FIG. 6 is a schematic diagram of the bonding structure of the first segment with the first adhesive member and the second adhesive member (viewed along the X direction) of some embodiment of this application.
FIG. 7 is a schematic diagram of the bonding structure of the first segment with the first adhesive member and the second adhesive member (viewed along the M direction) according to some embodiment of this application.
FIG. 8 is a schematic diagram of the bonding structure between a first sub-adhesive member and a plurality of second sub-adhesive members according to some embodiments of this application.

List of reference numerals:
100. Secondary battery;
10. Housing; 11. First housing; 12. Second housing;
20. Electrode assembly; 20a. Winding center; 21. First electrode plate; 211. First current collector; 212. First active material layer; 213. First segment; 213a. First surface; 213b, Second surface; 2131, Terminating segment; 2132, Coating segment; 22, Second electrode plate; 221. Second current collector; 222. Second active material layer; 23. Separator; 231. Base layer; 232. Ceramic bonding layer; 24. First straight segment; 25. First curved segment; 26. Second straight segment; 27. Second curved segment;
30. First adhesive member; 30a. First substrate layer; 30b. First binder layer; 31. First sub-adhesive member; 32. Second sub-adhesive member;
40. Second adhesive member; 40a, First portion; 41. Second substrate layer; 42. Second bonding layer;
N. Winding direction; x. First direction; y. Second direction; z. Third direction; and M. direction perpendicular to first surface.

### DETAILED DESCRIPTION

Embodiments of the technical solutions of this application are described in detail below with reference to the drawings. The following embodiments are merely intended as examples to describe the technical solutions of this application more clearly, but not intended to limit the protection scope of this application.

In the description of the embodiments of this application, the technical terms "first", "second", and the like are merely used to distinguish between different objects, and shall not be construed as any indication or implication of relative importance or any implicit indication of the quantity, particular sequence or primary-secondary relationship of the technical features indicated. In the description of the embodiments of this application, "a plurality of" means two or more unless otherwise expressly and specifically defined.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In this application, reference to "embodiment" means that specific features, structures or characteristics described with reference to the embodiment may be incorporated in at least one embodiment of this application. The occurrence of the phrase at various locations in the specification does not necessarily all refer to the same embodiment, nor is it a separate or alternative embodiment that is mutually exclusive with other embodiments. Further, the technical features described below in different embodiments of this application may be combined with each other as long as they do not conflict with each other.

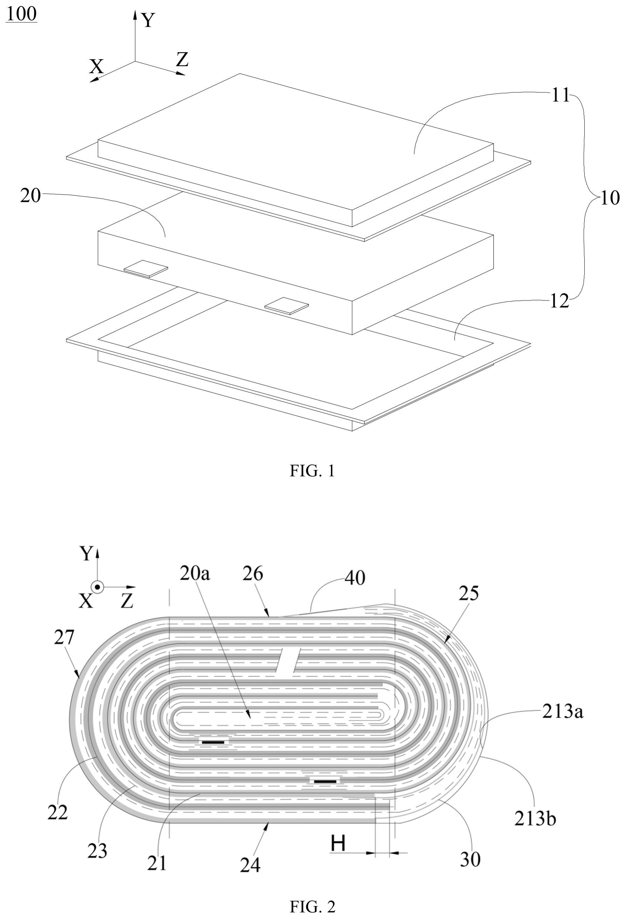

In a first aspect, this application provides a secondary battery 100. Referring to FIG. 1 and FIG. 2, the secondary battery 100 includes a housing 10, an electrode assembly 20, a first adhesive member 30, and a second adhesive member 40. The electrode assembly 20 is accommodated in the housing 10, and the second adhesive member 40 can be used for terminating the electrode assembly 20, thereby connecting the electrode assembly 20 into a structurally stable whole. The second adhesive member 40 can also be used for bonding the electrode assembly 20 to the housing 10, thereby reducing relative movement between the electrode assembly 20 and the housing 10.

For the above housing 10, referring to FIG. 1, the housing 10 encloses an accommodation cavity (not labeled in the figure), the accommodation cavity can accommodate the above electrode assembly 20 and an electrolyte solution (not labeled in the figure). In some embodiments of this application, the housing 10 may adopt a packaging bag, for example, the housing 10 may adopt a multilayer composite film packaging bag containing a metal layer. The above packaging bag may be an aluminum laminated film packaging bag including a PP (polypropylene) layer and an aluminum layer. PP layers may be arranged on both surfaces of the aluminum layer in the thickness direction, thereby being conducive to the insulation sealing of the packaging bag.

Optionally, the housing 10 includes a first housing 11 and a second housing 12. The first housing 11 and/or the second housing 12 is provided with a recessed cavity (not labeled in the figure). The electrode assembly 20 may be placed in the recessed cavity, and then the first housing 11 and the second housing 12 forms a complete housing 10 by hot-pressing and sealing, where the above recessed cavity forms the accommodation cavity.

For the electrode assembly 20, referring to FIG. 1 to FIG. 3a, the electrode assembly 20 is disposed in the above accommodation cavity of the housing 10. The electrode assembly 20 includes a first electrode plate 21, a second electrode plate 22, and a separator 23. The first electrode plate 21, the second electrode plate 22, and the separator 23 are stacked and wound to form a jelly-roll electrode assembly 20. The separator 23 is disposed between the first electrode plate 21 and the second electrode plate 22 to separate them, where FIG. 2 illustrates the jelly-roll structure of the electrode assembly 20. The first electrode plate 21 and the second electrode plate 22 have opposite polarities, for example, the first electrode plate 21 is a cathode electrode plate, and the second electrode plate 22 is an anode electrode plate. The first electrode plate 21 includes a first current collector 211 and a first active material layer 212, and the first active material layer 212 is coated on at least one surface of the first current collector 211. The second electrode plate 22 includes a second current collector 221 and a second active material layer 222, and the second active material layer 222 is coated on at least one surface of the first current collector 211. Alternatively, in some other embodiments, the first electrode plate 21 is an anode electrode plate, and the second electrode plate 22 is a cathode electrode plate.

For the separator 23 of the electrode assembly 20, the separator 23 can be bonded between the first electrode plate 21 and the second electrode plate 22 to be conducive to improving the bonding strength of the electrode assembly 20 and improving the flatness of an interface between the first electrode plate 21 and the second electrode plate 22, so as to reduce the risk of termination tearing and enhance the cycle performance of the secondary battery.

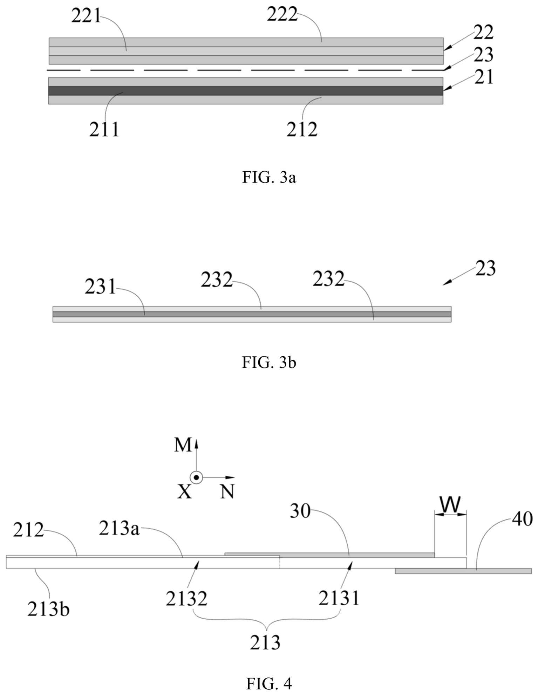

Referring to FIGS. 3a and 3b, the separator 23 includes a base layer and an bonding layer 232 disposed on at least one surface of the base layer 231. For example, bonding layers 232 are provided on both surfaces of the base layer 231 in the thickness direction. When the separator 23 is arranged between the first electrode plate 21 and the second electrode plate 22, the first electrode plate 21 and the second electrode plate 22 can be simultaneously bonded.

The material of the base layer 231 includes one or more of high-molecular polyethylene, polypropylene, polyethylene terephthalate, polybutylene terephthalate, polystyrene, polyphenylene, polynaphthalene, polyimide, polyamide, aramid, and poly(p-phenylene benzobisthiazole). The material of the bonding layer 232 may include at least one of polyvinylidene difluoride or vinyl polyhedral oligomeric silsesquioxane.

In some embodiments, the peel strength between the separator 23 and the first electrode plate 21 or the second electrode plate 22 is 8 N/m to 12 N/m, thereby effectively improving the overall bonding strength of the electrode assembly 20. The magnitude of the peel strength can be controlled by the content of the binder in the bonding layer 232. When the peel strength is too high, excessive binder would block pores on the surfaces of the first electrode plate 21 and the second electrode plate 22, leading to issues such as lithium plating and black flecks. However, the insufficient binder will result in low bonding strength of the electrode assembly 20 and poor interface flatness between the first electrode plate 21 and the second electrode plate 22. During drop impacts, the electrode assembly 20 is more prone to shift within the housing 10, increasing the risk of termination tearing.

In the embodiments of this application, for example, the first electrode plate 21 serves as the cathode electrode plate, the second electrode plate 22 serves as the anode electrode plate, and the electrode assembly 20 adopts a jelly-roll type. The first electrode plate 21 includes a first segment 213, and the first segment 213 constitutes an outermost portion of the electrode assembly 20. Referring to FIGS. 2 and 4, the first segment 213 has a first surface 213a facing the winding center 20a of the electrode assembly 20 and a second surface 213b opposite to the winding center 20a. Along a winding direction N of the first segment 213, that is, winding along the length direction of the first electrode plate 21, the first segment 213 includes a terminating segment 2131, the terminating segment 2131 is a hindmost winding segment of the first segment 213. Both the first surface 213a and the second surface 213b of the terminating segment 2131 are blank foil regions, and in these embodiments, the blank foil regions refer to segments not coated with the active material layer.

It is hereby noted that, when the first current collector 211 of the first electrode plate 21 is coated with the first active material layer 212, the first surface 213a serves as a surface that is of the first active material layer 212 and that faces the winding center 20a. When the first current collector 211 is not coated with the first active material layer 212, a surface that is of the first current collector 211 and that faces the winding center 20a serves as the first surface 213a. The same applies to the second surface 213b, and the second electrode plate 22 follows the same principle.

Optionally, the first segment 213 further includes a coating segment 2132 connected to the above terminating segment 2131. The coating segment 2132 is a segment of the first segment 213 coated with the active material layer. Preferably, only the first surface 213a of the first segment 213 is provided with the first active material layer 212. The first active material layer 212 is disposed on the first surface 213a of the coating segment 2132, i.e., a single-sided cathode electrode plate adopted by the first segment 213. In this embodiment, the outermost layer adopts a single-sided cathode electrode plate. Since there is no corresponding anode electrode plate on an outer side of the single-sided cathode electrode plate, one layer of active material layer can be reduced, which is conducive to improving the energy density of the secondary battery 100.

For the above first adhesive member 30, referring to FIG. 4, the first adhesive member 30 is at least partially bonded to the first surface 213a of the terminating segment 2131. The first surface 213a of the terminating segment 2131 is a blank foil region, and the shear force applied to the blank foil region can be transmitted to the first adhesive member 30, thereby enhancing the tensile strength of the terminating segment 2131 and reducing the risk of tearing in the terminating segment 2131.

Optionally, one end of the first adhesive member 30 is bonded to the coating segment 2132, that is, the first adhesive member 30 is bonded to the first active material layer 212 of the coating segment 2132, while the other end thereof is bonded to the terminating segment 2131, and the first adhesive member 30 covers the junction between the coating segment 2132 and the terminating segment 2131. When the first active material layer 212 is coated on the first surface 213a, at the joint between the coating segment 2132 and the terminating segment 2131, the first active material layer 212 is prone to form raised structures such as trailing burrs. These raised structures may interfere with the separator 23 and cause the first active material layer 212 in this portion to shed powder and peel off. In this embodiment, by bonding and covering with the first adhesive member 30, the probability of raised structures such as burrs piercing the separator 23 can be reduced, thereby lowering the short circuit risk, and may also reduce powder shedding of the active material layer at the joint.

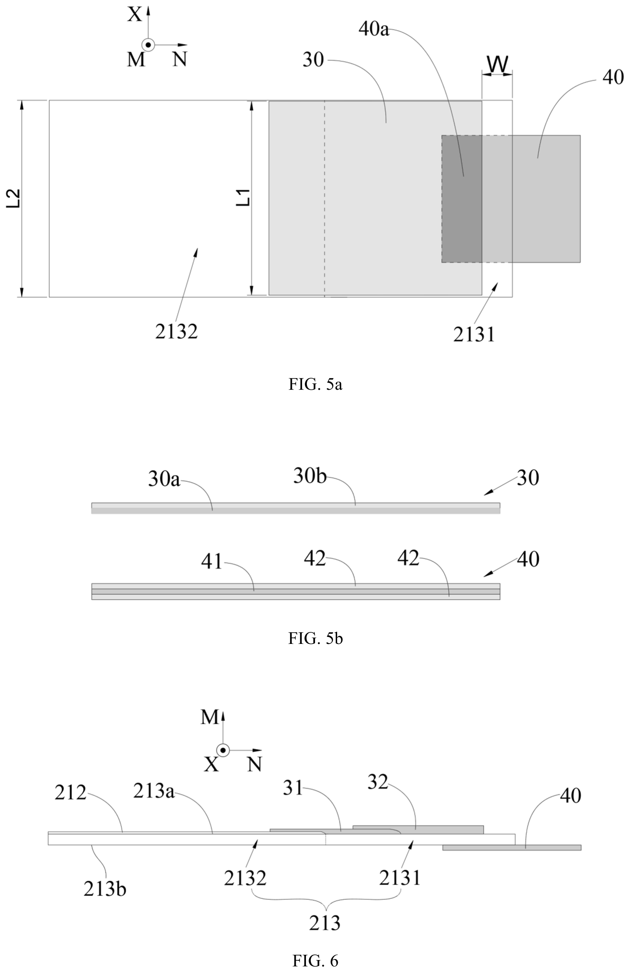

When the first adhesive member 30 covers the joint between the coating segment 2132 and the terminating segment 2131, the first adhesive member 30 may be adopted to fully cover the joint along a first direction X. For example, referring further to FIG. 5a, along the first direction X, a length of the first adhesive member 30 is L1 mm, a length of the first segment 213 is L2 mm, and 0 ≤ L1 - L2 ≤ 3; the first direction X is parallel to a direction of the winding central axis of the electrode assembly 20, and the first adhesive member 30 fully covers the joint in the first direction X, so as to further reduce the risk of the separator 23 being pierced by protruding structures such as burrs at the joint, thereby preventing short circuits, and to minimize the shedding of the active material at the joint.

Still referring to FIGS. 4 and 5a, along the winding direction N of the first segment 213, a distance between the first adhesive member 30 and the end of the terminating segment 2131 is a first distance W, and the first distance W is greater than or equal to 2 mm, so as to reserve a cutting space for the end of the first segment 213. It is hereby noted that when the first adhesive member 30 covers the end of the terminating segment 2131, there are no further components beyond the end for the first adhesive member 30 to bond to, that is, insufficient bonding of the first adhesive member 30 may occur. This would lead to curling of the first adhesive member 30 at the end. Moreover, during cutting the first segment 213, there is a significant risk of cutting into the first adhesive member 30, which would also cause curling of the first adhesive member 30 at the end. Such curling would adversely affect the energy density of the secondary battery 100 and would also be prone to interfere with the separator 23. In this embodiment, reserving the first distance can allow the first adhesive member 30 to be fully bonded to the terminating segment 2131, effectively minimizing curling of the first adhesive member 30.

Optionally, the first adhesive member 30 may adopt an adhesive tape. During use, the adhesive tape can be directly bonded to the first surface 213a of the terminating segment 2131 and to the first active material layer 212 of the coating segment 2132. For example, the first adhesive member 30 is a single-sided adhesive tape with adhesion on only one side, and the single-sided adhesive tape includes a first substrate layer 30a and a first binder layer 30b coated on one side of the first substrate layer 30a (refer to FIG. 5b). The first binder layer 30b can directly bond the first active material layer 212 and the terminating segment 2131. The shear force acting on the blank foil region of the terminating segment 2131 can be transferred to the single-sided adhesive tape, thereby reducing tearing of the terminating segment 2131. Moreover, the single-sided adhesive tape directly covers the joint between the coating segment 2132 and the terminating segment 2131, thereby reducing the risk of raised structures such as burrs piercing the separator 23.

The material of the first substrate layer 30a includes at least one of polyethylene terephthalate (PET), polyimide, or polypropylene. Polyethylene terephthalate exhibits excellent physical and mechanical properties, and with a long-term service, the temperature can be up to 120 °C. It possesses outstanding insulativity, maintaining good electrical performance even under high temperature and high frequency conditions. Additionally, it demonstrates superior creep resistance, fatigue resistance, friction resistance, and dimensional stability. By using the first adhesive member 30 made of polyethylene terephthalate, the tensile strength of the terminating segment 2131 may be sufficiently enhanced to reduce the risk of tearing in the terminating segment 2131. The material of the first binder layer 30b includes at least one of polyacrylic acid (PAA), polymethyl methacrylate, polypropylene, polyethylene, polyamide, styrene-butadiene rubber, acrylonitrile-butadiene rubber, cis-polybutadiene rubber, isoprene rubber, ethylene propylene rubber, or neoprene rubber.

For the above second adhesive member 40, the second adhesive member 40 is bonded between the electrode assembly 20 and the housing 10. For example, referring to FIG. 1 as well as FIGS. 4 and 5a, the second adhesive member 40 is disposed on the second surface 213b of the terminating segment 2131 to further enhance the tensile strength of the terminating segment 2131. Moreover, the second adhesive member 40 is bonded between the second surface 213b of the terminating segment 2131 and the housing 10, which may reduce relative movement between the electrode assembly 20 and the housing 10. In the event of a drop or collision of the secondary battery 100, the bonding effect of the second adhesive member 40 may effectively mitigate impacts between the electrode assembly 20 and the housing 10, thereby reducing the risk of failure in the secondary battery 100.

The second adhesive member 40 may also adopt an adhesive tape, for example, a double-sided adhesive tape with adhesion on both sides. This double-sided adhesive tape includes a second substrate layer 41 and second bonding layers 42 and/or a hot melt adhesive layer coated on both sides of the second substrate layer 41. One side of the second adhesive member 40 is bonded to the electrode assembly 20, while the other side thereof is bonded to the housing 10, thereby reducing relative movement between the electrode assembly 20 and the housing 10. The material of the second substrate layer 41 includes one or more of polyethylene terephthalate, cellulose derivatives, polyvinyl chloride, polyolefin, polystyrene, polyester, polyimide, polyamide, polycarbonate, polyphenylene sulfide, or polyethylene terephthalate. When the second bonding layer 42 is an binder layer, a material thereof includes one or more of rubber-based resin, acrylic resin, or silicone-based resin. When the second bonding layer 42 is a hot melt adhesive layer, its material includes one or more of styrene-isoprene-styrene block copolymer, ethylene-vinyl acetate copolymer, polyurethane elastomer, polyurethane acrylate, polyisobutylene, or polybutadiene. After the electrode assembly 20 is wound, it can be fixed and terminated by the second adhesive member 40, one termination adhesive and the bonding termination step can be eliminated, improving the energy density of the secondary battery 100 while reducing the risk of terminating segment tearing.

Along a direction M perpendicular to the first surface 213a, the second adhesive member 40 partially overlaps the first adhesive member 30. That is, along the direction M perpendicular to the first surface 213a, a projection of the second adhesive member 40 partially overlaps a projection of the first adhesive member 30. When the secondary battery 100 drops or collides, the second adhesive member 40 bonds the electrode assembly 20 and the housing 10, which may reduce the relative movement between the electrode assembly 20 and the housing 10. However, the second adhesive member 40 would be subjected to the significant shear force, which may be prone to cause the terminating segment 2131 bonded by the second adhesive member 40 to tear. In this embodiment, since the projection of the above first adhesive member 30 overlaps the projection of the second adhesive member 40, it is allowed that part of the shear force acting on the second adhesive member 40 to be transmitted to the first adhesive member 30, thereby reducing shear force concentration and further lowering the risk of tearing at the terminating segment 2131.

In some embodiments, a portion of the second adhesive member 40 overlapping the projection of the first adhesive member 30 serves as a first portion 40a. Along the direction M perpendicular to the first surface 213a, a projection of the first portion 40a falls within the projection of the first adhesive member 30. The transmission of a shear force between the first adhesive member 30 and the second adhesive member 40 may effectively reduce the risk of tearing at the terminating segment 2131.

Preferably, an area of the first portion 40a is S1, an area of the second adhesive member 40 is S2, and 15% ≤ S1 / S2 ≤ 50%. Sufficient adhesive bonding area of the second adhesive member 40 can enhance the tensile strength of the terminating segment 2131 on one hand, and can ensure adequate overlap area between the second adhesive member 40 and the first adhesive member 30 for shear force transmission on the other hand, thereby reducing the risk of terminating segment tearing.

Furthermore, an actual adhesive bonding area between the second adhesive member 40 and the first segment 213 is S3, an effective adhesive bonding area between the second adhesive member 40 and the first segment 213 is S4, and S3 > S4. Sufficient actual adhesive bonding area can reduce the risk of tearing at the first segment 213.

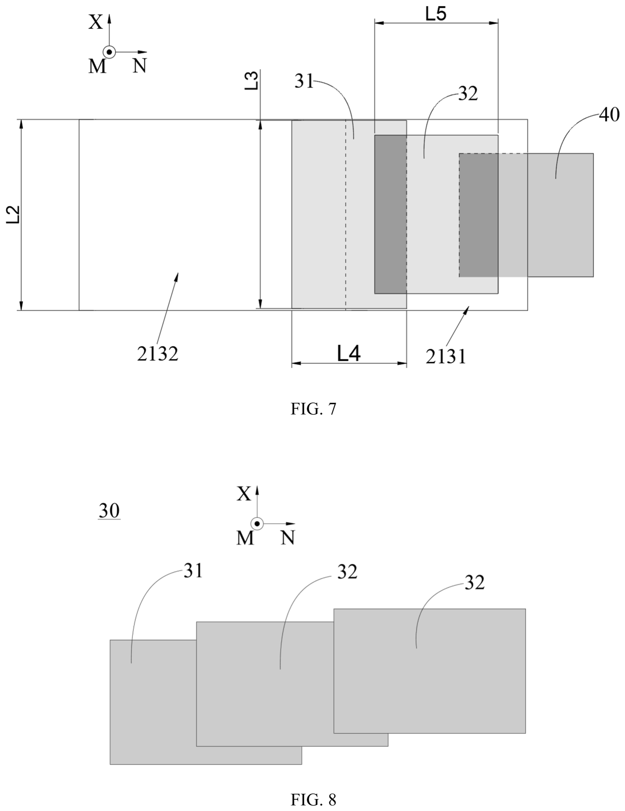

In some embodiments, referring to FIG. 6 and FIG. 7, the first adhesive member 30 includes a first sub-adhesive member 31 and a second sub-adhesive member 32. The first sub-adhesive member 31 is disposed on the first surface 213a, and the second sub-adhesive member 32 is also disposed on the first surface 213a. Moreover, the second sub-adhesive member 32 is bonded to the first sub-adhesive member 31 at the terminating segment 2131. Along the winding direction N of the first segment 213, if the length of the first adhesive member 30 is too long (30 mm), bubbles may appear when bonding the first segment 213. These bubbles would not only affect the energy density of the secondary battery 100 but also result in poor bonding effect of the first adhesive member 30, leading to insignificant shear force transmission between the second adhesive member 40 and the first adhesive member 30. With this regard, in some embodiments of this application, the first adhesive member 30 is configured as a structure with two sub-adhesive members, i.e., the first adhesive member 30 includes the first sub-adhesive member 31 and the second sub-adhesive member 32 bonded to each other. Both the first adhesive member 30 and the second adhesive member 40 are relatively short, which may effectively reduce the occurrence of bubbles during the bonding process. A projection of the second sub-adhesive member 32 on the second surface 213b partially overlaps the second adhesive member 40. All the shear force on the second adhesive member 40 can be transmitted to the second sub-adhesive member 32 and then to the first sub-adhesive member 31, thereby reducing shear force concentration.

Optionally, one end of the first sub-adhesive member 31 is bonded to the coating segment 2132, the other end thereof is bonded to the terminating segment 2131, and the first sub-adhesive member 31 covers the junction between the coating segment 2132 and the terminating segment 2131. By using a relatively short first sub-adhesive member 31, bonding via the first sub-adhesive member 31 may reduce bubble formation during bonding of the first sub-adhesive member 31 and can cover raised structures such as trailing burrs at the junction. This helps prevent raised structures such as burrs from piercing the separator 23, thereby reducing the risk of short circuits and minimizing powder shedding of the active material layer at the joint.

Further, along the first direction X, a length of the first sub-adhesive member 31 is L3 mm, the length of the first segment 213 is L2 mm, and 0 ≤ L3 - L2 ≤ 3. The first sub-adhesive member 31 fully covers the joint along the first direction X to further reduce the risk of raised structures such as burrs piercing the separator 23, thereby lowering the risk of short circuits.

The above first adhesive member 30 may also include a plurality of sub-adhesive members. For example, further referring to FIG. 8, the first adhesive member 30 includes a plurality of second sub-adhesive members 32.

The plurality of second sub-adhesive members 32 are sequentially arranged on the first surface 213a along the winding direction N of the first segment 213, and adjacent second sub-adhesive members 32 are bonded to each other. Along the winding direction N of the first segment 213, the second sub-adhesive member 32 at an arrangement starting end is bonded to the first sub-adhesive member 31 on the terminating segment 2131, and along the direction M perpendicular to the first surface 213a, the projection of the second sub-adhesive member 32 at an arrangement terminal end partially overlaps the projection of the second adhesive member 40. The structural arrangement of the plurality of sub-adhesive members may further reduce bubble formation during bonding and minimize shear force concentration, thereby lowering the risk of terminating segment 2131 tearing.

In some embodiments, referring to FIG. 7, along the winding direction N of the first segment 213, the first sub-adhesive member 31 has a length of L4 mm, where L4 ≤ 30. When the length of the first sub-adhesive member 31 exceeds 30 mm, bubbles are more likely to form during bonding by the first sub-adhesive member 31. Therefore, in some embodiments of this application, the first sub-adhesive member 31 is preferably less than 30 mm in length. The second sub-adhesive member 32 can also be similarly configured, i.e., along the winding direction N of the first segment 213, the second sub-adhesive member 32 has a length of L5 mm, where L5 ≤ 30, thereby reducing bubbles forming during the bonding of the second sub-adhesive member 32.

Referring to FIGS. 2 and 4, FIG. 2 shows the jelly-roll structure of the electrode assembly 20. The first segment 213 includes a first straight segment 24, a first curved segment 25, a second straight segment 26, and a second curved segment 27 that are connected. The first straight segment 24 and the second straight segment 26 are oppositely arranged in a second direction Y, the first curved segment 25 and the second curved segment 27 are both connected between the first straight segment 24 and the second straight segment 26, and the first curved segment 25 and the second curved segment 27 are oppositely arranged in a third direction Z. For example, the first segment 213 is first wound to form the first curved segment 25, then straightened to form the second straight segment 26. The second straight segment 26 extends and is wound to form the second curved segment 27, and is finally straightened and terminated to form the first straight segment 24.

The second adhesive member 40 is partially disposed on the first straight segment 24 or partially disposed on the second straight segment 26. For example, when a hindmost winding end of the first segment 213 is close to the first straight segment 24, the second adhesive member 40 can be partially bonded to the first straight segment 24. Alternatively, as shown in FIG. 2, when the hindmost winding end of the first segment 213 is close to the second straight segment, the second adhesive member 40 can be partially bonded to the second straight segment 26. By partially arranging the second adhesive member 40 on the flat first straight segment 24 or second straight segment 26, bonding can be facilitated and the bonding effect can be improved, thereby conducive to enhancing the tensile strength of the first segment 213 and reducing the risk of tearing in the first segment 213.

For the thickness of the electrode assembly 20, when the thickness of the electrode assembly 20 is greater than or equal to 6.95 mm, that is, along the second direction Y in FIG. 2, the thickness of the electrode assembly 20, the length of the first adhesive member 30 should be greater than or equal to 30 mm, where in this case, a plurality of first sub-adhesive members 31 can be used. The relationship between the thickness of the electrode assembly 20 and the length L of a corner, that is, the first curved segment 25 or second curved segment 27, of the outermost first segment 213 is L = (π * T) / 2. In this application, to achieve anti-collision and anti-tearing while preventing bubble forming during adhesive bonding, the thickness of the electrode assembly 20 satisfies: L + H + W ≤ 25 to 30 mm. H is a length by which the second active material layer 222 extends beyond the first active material layer 212 along the winding direction N of the first segment 213, i.e., dimension H in FIG. 2. W is a distance between the first adhesive member 30 and the end of the terminating segment 2131, i.e., the above first distance W.

In some embodiments of this application, the first adhesive member 30 being at least partially bonded to the first surface 213a of the terminating segment 2131 may enhance the tensile strength of the terminating segment 2131, thereby reducing the risk of tearing in the terminating segment 2131. The second adhesive member 40 is disposed on the second surface 213b of the terminating segment 2131 and bonds the terminating segment 2131 to the housing 10, thereby reducing relative movement between the electrode assembly 20 and the housing 10 and increasing the tensile strength of the terminating segment 2131 again, thus further lowering the risk of tearing in the terminating segment 2131. Meanwhile, along the direction perpendicular to the first surface 213a, the projection of the second adhesive member 40 partially overlaps the projection of the first adhesive member 30. When the secondary battery 100 drops or collides, it is allowed that part of the shear force on the second adhesive member 40 to be transmitted to the first adhesive member 30, thereby reducing shear force concentration and further lowering the risk of tearing at the terminating segment 2131.

### Embodiments

Hereinafter, embodiments and comparative embodiments are given to more specifically describe the implementations of the present application. Various tests and evaluations were performed as follows.

### Embodiment 1

### Preparation of a positive electrode plate (cathode electrode)

Mixing lithium cobalt oxide (LiCoO₂) as a positive active material, conductive carbon black as a conductive agent, and polyvinylidene fluoride (PVDF) as a binder in a weight ratio of 97.5:1:1.5, and adding N-methyl-pyrrolidone (NMP) as a solvent to prepare a slurry in which a solid content is 75 wt%, and stirring evenly. Evenly applying the slurry on one surface of a 9 µm thick positive current collector aluminum foil, and drying at 90 °C to obtain a positive electrode plate with a 110 µm thick positive active material layer. The coating on a single side of the positive electrode plate is completed upon completion of the above steps. Subsequently, the above-mentioned steps are repeated on the other surface of the positive electrode plate to obtain a positive electrode plate with the positive active material layer on both sides. After coating, performing cold pressing, cutting, slitting, and drying under vacuum conditions at 85 °C for 4 hours to obtain a positive electrode plate with a size of 74 mm × 867 mm.

### Preparation of a negative electrode plate (anode electrode)

Mixing graphite powder as a negative active material, conductive carbon black (Super P) as a conductive agent, and styrene-butadiene rubber (SBR) as a binder in a weight ratio of 96:1.5:2.5. Then adding deionized water as a solvent to prepare a slurry in which a solid content is 70 wt%, and stirring evenly. Evenly applying the slurry on one surface of a 5 µm thick negative current collector copper foil, and drying at 110 °C to obtain a negative electrode plate with a 130 µm thick negative active material layer on a single side. The coating on a single side of the negative electrode plate is completed upon completion of the above steps. Subsequently, the above-mentioned steps are repeated on the other surface of the negative electrode plate to obtain a negative electrode plate with the negative active material layer on both sides. After coating, performing cold pressing, cutting, slitting, and drying under vacuum conditions at 120 °C for 12 hours to obtain a negative electrode plate with a size of 76.6 mm × 875 mm.

### Preparation of a separator

Mixing polyvinylidene difluoride (binder) and aluminum oxide ceramic at a mass ratio of 9:1, adding deionized water as a solvent to prepare a slurry in which a solid content is 25 wt%, and stirring evenly. Applying the slurry uniformly on one surface of a 5 µm thick polyethylene porous polymer film, performing drying, and then applying the slurry uniformly on the other surface of the polyethylene porous polymer film to obtain a separator with a 2 µm thick aluminum oxide ceramic layer coated on both sides.

### Preparation of an electrolyte solution

In a dry argon gas environment, mixing organic solvents ethylene carbonate, ethyl methyl carbonate, and diethyl carbonate at the mass ratio of 30:50:20 to obtain an organic solution, and then adding lithium salt lithium hexafluorophosphate (LiPF₆) to the organic solvent, dissolving and mixing uniformly to obtain an electrolyte solution with a lithium salt concentration of 1.15 mol/L.

### Preparation of the first adhesive member

Coating polyacrylic acid (PAA) on one surface of an 8 µm thick polyethylene terephthalate film (PET) as the first substrate layer, drying at 80 °C to form a 4 µm thick first binder layer, and obtaining the first adhesive member.

### Preparation of the second adhesive member

Heating a styrene-isoprene-styrene block copolymer to 150 °C until molten, then coating it on one surface of an 8 µm thick polyethylene terephthalate film (PET) as the second substrate layer, and drying at 120 °C to form an 8 µm thick second binder layer.

Coating polyacrylic acid (PAA) on the other surface of the second substrate layer, drying at 80 °C to form a 4 µm thick second binder layer, and obtaining a second adhesive member including the second binder layer, the second substrate layer, and the second binder layer that are stacked sequentially.

### Preparation of a lithium-ion battery

Stacking the prepared positive electrode plate, separator, and negative electrode plate sequentially, where the separator between the positive electrode plate and negative electrode plate provides isolation, then performing winding to form an electrode assembly with a jelly-roll structure, where an outermost layer is a positive electrode plate coated with an active material layer on one side, and a first adhesive member, made of modified polypropylene, is bonded to the coating segment and empty foil segment of the outermost positive electrode plate.

Bonding the prepared second adhesive member to an outer surface of the electrode assembly via the second adhesive layer, then placing the electrode assembly into an aluminum laminated film packaging bag, and bonding the first adhesive layer to an inner surface of the housing. Performing steps such as top-side sealing, vacuum drying, electrolyte injection, chemical formation (temperature 85 °C, pressure 1.05 MPa, 3.5 V), capacity grading, and degassing to obtain a lithium-ion battery.

A mass of the lithium-ion battery is 61.5 g, and a liquid retention coefficient is 1.75 g/Ah. A size of the first adhesive layer is 20 mm × 30 mm, and a orthographic projection size of the electrode assembly along the stacking direction of the electrode assembly, the adhesive member, and housing is 30 mm × 40 mm, that is, S5 = 600 mm², and S6 = 1200 mm²; the actual adhesive bonding area is S= S5 = 600 mm². Along the thickness direction of the positive electrode plate, the area where the second adhesive member overlaps the projection of the first adhesive member is 100 mm² (S1 = 100 mm²), the distance between the first adhesive member and the end of the positive electrode plate is 3.2 mm (W = 3.2 mm), the length difference, that is, the length along the central axis of the electrode assembly, between the first adhesive member and the outer single-sided positive electrode plate (including the blank foil region) is 0.8 mm (L1 - L2 = 0.8 mm), and the separator peel strength is 10 N/m.

### Embodiment 2

The difference from Embodiment 1 is: S1 = 60 mm².

### Embodiment 3

The difference from Embodiment 1 is: S1 = 90 mm².

### Embodiment 4

The difference from Embodiment 1 is: S1 = 150 mm².

### Embodiment 5

The difference from Embodiment 1 is: S1 = 240 mm².

### Embodiment 6

The difference from Embodiment 1 is: S1 = 300 mm².

### Embodiment 7

The difference from Embodiment 1 is: S1 = 360 mm².

### Embodiment 8

The difference from Embodiment 1 is: W = 2 mm.

### Embodiment 9

The difference from Embodiment 1 is: L1 - L2 = 3 mm.

### Embodiment 10

The difference from Embodiment 1 is: L1 - L2 = 0 mm.

### Embodiment 11

The differences from Embodiment 1 are: S1 = 150 mm², the mass ratio of polyvinylidene difluoride to aluminum oxide ceramic is 6:4, and the peel strength between the separator and the positive electrode plate is 7 N/m.

### Embodiment 12

The differences from Embodiment 1 are: S1 = 150 mm², the mass ratio of polyvinylidene difluoride to aluminum oxide ceramic is 8:2, and the peel strength between the separator and the positive electrode plate is 8 N/m.

### Embodiment 13

The differences from Embodiment 1 are: S1 = 150 mm², the mass ratio polyvinylidene difluoride to aluminum oxide ceramic is 9.5:0.5, and the peel strength between separator and positive electrode plate is 12 N/m.

### Embodiment 14

The differences from Embodiment 1 are: S1 = 150 mm², the mass ratio of polyvinylidene difluoride to aluminum oxide ceramic is 9.8:0.2, and the peel strength between the separator and the positive electrode plate is 13 N/m.

### Comparative Embodiment 1

The differences from Embodiment 1 are: the first adhesive member does not cover the empty foil segment, the projection of the first adhesive member does not overlap the projection of the second adhesive member in the thickness direction of the positive electrode plate, and S1 = 0.

### Test methods and devices:

### Aluminum foil tearing rate test in drop:

Pretreating the lithium-ion battery at 25 °C, performing standing at a room temperature for 60 minutes, then measuring a voltage of the lithium-ion battery before the drop test; placing the lithium-ion battery into a fixture and using a drop tester to perform free falls from a height of 1.5 m above the ground in the following sequence: head-tail-head right corner-tail right corner-head left corner-tail left corner (angle: 45 ± 15°), repeating for 6 cycles. After the drop test, disassembling the battery cell and observing whether the aluminum foil is torn.

### Drop failure rate test:

Pretreating the lithium-ion battery at 25 °C, performing standing at a room temperature for 60 minutes, then measuring a voltage of the lithium-ion battery before the drop test; placing the lithium-ion battery into a fixture and using a drop tester to perform free falls from a height of 1.5 m above the ground in the following sequence: head-tail-head right corner-tail right corner-head left corner-tail left corner (angle: 45 ± 15°), repeating for 6 cycles. After the drop test, measuring and recording a voltage of the lithium-ion battery. Inspecting the appearance of the lithium-ion battery before and after the test and taking photographs. Pass criteria of the drop test are: no smoke, no leakage, and a voltage drop < 30 mV.

### Peel strength test:

According to GB/T 2792-2014 "Test Method for Peel Strength of Adhesive Tapes", the peel strength between the separator and the positive electrode plate or negative electrode plate is tested using a GoTech tensile testing machine, where in some embodiments of this application, testing the peel strength between the separator and the positive electrode plate is taken as an example. The testing process is as follows: discharging the lithium-ion battery to 0 V, then disassembling the lithium-ion battery, removing the separator and the electrode plate bonded thereto as a whole, and wiping an electrolyte solution on surfaces with dust-free paper. Then cutting it into strip-shaped samples of 20 mm × 60 mm. Along a length direction of the sample, bonding a side of the sample with the electrode assembly to a steel plate using a double-sided adhesive tape (Nitto 5000NS), where the bonding length is not less than 40 mm. Fixing the steel plate at the corresponding position of the GoTech tensile testing machine, pulling the other end of the sample not bonded to the separator on the electrode plate, placing the sample into the chuck and clamping it. The included angle between the pulled sample portion and the steel plate in space is 180°. The chuck pulls the sample at a speed of 5±0.2 mm/s. An average value of the tensile force in a stable region is finally recorded as the peel strength between the separator and the electrode plate, denoted as F, and measured in N/m.

The relevant preparation parameters and performance tests of each embodiment and comparative embodiment are shown in Table 1:

**Table 1**

| Case | Area of First portion S1 (mm²) | Area of second adhesive member S2 (mm²) | First distance W (mm) | Length difference between the first adhesive member and the first segment L1 - L2 (mm) | Separator peel strength (N/m) | Aluminum foil tearing rate in drop | Number of failures/total in drop test |
|---|---|---|---|---|---|---|---|
| Comparative Embodiment 1 | 0 | 600 | 3.2 | 0.8 | 10 | 8/10 | 9/10 |
| Embodiment 1 | 100 | 600 | 3.2 | 0.8 | 10 | 0/10 | 0/10 |
| Embodiment 2 | 60 | 600 | 3.2 | 0.8 | 10 | 5/10 | *5*/*10* |
| Embodiment 3 | 90 | 600 | 3.2 | 0.8 | 10 | 1/10 | 1/10 |
| Embodiment 4 | 150 | 600 | 3.2 | 0.8 | 10 | 0/10 | 0/10 |
| Embodiment 5 | 240 | 600 | 3.2 | 0.8 | 10 | 0/10 | 0/10 |
| Embodiment 6 | 300 | 600 | 3.2 | 0.8 | 10 | 0/10 | 0/10 |
| Embodiment 7 | 360 | 600 | 3.2 | 0.8 | 10 | 1/10 | 3/10 |
| Embodiment 8 | 100 | 600 | 2 | 0.8 | 10 | 2/10 | 0/10 |
| Embodiment 9 | 100 | 600 | 3.2 | 3 | 10 | 4/10 | 5/10 |
| Embodiment 10 | 100 | 600 | 3.2 | 0 | 10 | 0/10 | 3/10 |
| Embodiment 11 | 150 | 600 | 3.2 | 0.8 | 7 | 1/10 | 0/10 |
| Embodiment 12 | 150 | 600 | 3.2 | 0.8 | 8 | 0/10 | 0/10 |
| Embodiment 13 | 150 | 600 | 3.2 | 0.8 | 12 | 0/10 | 0/10 |
| Embodiment 14 | 150 | 600 | 3.2 | 0.8 | 13 | 0/10 | 2/10 |

According to Table 1 above, combined with Comparative Embodiment 1 and Embodiments 1 to 14, it can be seen that when the first adhesive member covers the empty foil segment and the projection of the first adhesive member overlaps the projection of the second adhesive member in the thickness direction of the positive electrode plate, the aluminum foil tearing rate in drop and drop failure rate thereof are significantly reduced. That is because part of the shear force applied on the second adhesive member can be transmitted to the first adhesive member, thereby reducing shear force concentration so as to consequently reducing aluminum foil tearing. Moreover, since the first adhesive member is bonded from the coating segment to the empty foil segment, it can cover the edge burrs of the active material layer, reducing the risk of burrs piercing the separator and thereby lowering the drop failure rate.

In Embodiment 2 above, S1 / S2 = 10%, and the first portion occupies a relatively small area, in this case, it has higher risks of aluminum foil tearing or drop failure. In Embodiment 7, S1 / S2 = 60%, and the excessively large area ratio of the first portion may also lead to cutting the first adhesive member during cutting, causing edge curling of the first adhesive member. Therefore, Embodiment 7 also exhibits lower aluminum foil tearing rate and drop failure risks. Moreover, in Embodiment 3, S1 / S2 = 15%, and in Embodiment 6, S1 / S2 = 50%, which exhibit lower aluminum foil tearing rates and drop failure risks. In this application, it is preferable that 15% ≤ S1 / S2 ≤ 50%.

A length of the first adhesive member in a width direction of the electrode plate should not be too large or too small. If it is too large, it may cause curling in the width direction of the electrode plate, entering the top sealing region and affecting the energy density of the lithium-ion battery. If it is too small, it may be difficult to cover the burrs at the edges of the active material layer, which could pierce the separator and lead to a short circuit. In this application, it is preferable that 0 ≤ L1 - L2 ≤ 3.

Moreover, when the first distance W ≥ 2 mm, it may better reduce curling in the length direction of the electrode plate during cutting the first adhesive member. With reference to Embodiment 11, when the peel strength between the separator and the positive electrode plate is 7 N/m, the bonding strength of the electrode assembly is insufficient, which may still pose a risk of aluminum foil tearing. With reference to Embodiment 14, when the peel strength between the separator and the positive electrode plate is 13 N/m, the peel strength is too high. Excessive binder may clog pores on surfaces of the positive electrode plate and the negative electrode plate, leading to issues such as lithium plating and black flecks, thereby still posing a risk of drop failure of the lithium-ion battery. With reference to Embodiments 11 to 14, in this application, the peel strength of the separator is preferably 8 N/m to 12 N/m, which exhibits lower aluminum foil tearing rate in drop and reduced risk of drop failure.

According to a second aspect, this application further provides an electronic device, the electronic device includes the secondary battery according to any embodiment of the first aspect described above. The electronic device may be a portable consumer electronic device, an electric tool, a drone, a wearable electronic device, an electric automobile, or the like.

Finally, it should be noted that the above-mentioned embodiments are only adopted to illustrate the technical solutions of this application and are not intended to limit same. Based on the conception of this application, the above embodiments or the technical features of different embodiments may also be combined, the steps may be carried out in any order, and there are many other variations in different aspects of this application as described above, which are not provided in detail for brevity. Although this application is described in detail with reference to the foregoing embodiments, a person of ordinary skill in the art understands that modifications may still be made to the technical solutions described in the foregoing embodiments or equivalent replacements may be made to some technical features thereof. However, such modifications and replacements do not make the essence of the corresponding technical solutions depart from the spirit and scope of the technical solutions in each embodiment of this application.

## Claims

1. A secondary battery, **characterized in that** the secondary battery comprises:
a housing;
an electrode assembly, disposed within the housing, the electrode assembly comprising a first electrode plate, a second electrode plate, and a separator located between the first electrode plate and the second electrode plate, wherein the first electrode plate, the second electrode plate, and the separator are stacked and wound, and a direction of a winding central axis of the electrode assembly is a first direction; the first electrode plate comprises a first segment, the first segment constitutes an outermost part of the electrode assembly, and the first segment has a first surface facing the winding central axis and a second surface facing away from the winding central axis; along the winding direction of the first segment, the first segment comprises a terminating segment, wherein both a first surface and a second surface of the terminating segment are blank foil regions;
a first adhesive member, at least partially bonded to the first surface of the terminating segment; and
a second adhesive member, disposed on the second surface of the terminating segment and bonding the second surface of the terminating segment to the housing, wherein along a direction perpendicular to the first surface, the second adhesive member partially overlaps the first adhesive member.

2. The secondary battery according to claim 1, **characterized in that** an overlapped portion between the second adhesive member and the first adhesive member serves as a first portion, an area of the first portion is S1, an area of the second adhesive member is S2, and 15% ≤ S1 / S2 ≤ 50%.

3. The secondary battery according to claim 1 or 2, **characterized in that** along the winding direction of the first segment, a distance between the first adhesive member and an end of the terminating segment is a first distance, and the first distance is greater than or equal to 2 mm.

4. The secondary battery according to any one of claims 1 to 3, **characterized in that** the first segment further comprises a coating segment connected to the terminating segment.

5. The secondary battery according to claim 4, **characterized in that** one end of the first adhesive member is bonded to the coating segment, the other end thereof is bonded to the terminating segment, and the first adhesive member covers a junction between the coating segment and the terminating segment; and
along the first direction, a length of the first adhesive member is L1 mm, a length of the first segment is L2 mm, and 0 ≤ L1 - L2 ≤ 3.

6. The secondary battery according to claim 4 or 5, **characterized in that** the first adhesive member comprises:
a first sub-adhesive member, disposed on the first surface; and
a second sub-adhesive member, disposed on the first surface, wherein the second sub-adhesive member is bonded to the first sub-adhesive member at the terminating segment, and a projection of the second sub-adhesive member on the second surface along a direction perpendicular to the first surface partially overlaps the second adhesive member.

7. The secondary battery according to claim 6, **characterized in that** one end of the first sub-adhesive member is bonded to the coating segment, the other end thereof is bonded to the terminating segment, and the first sub-adhesive member covers a junction between the coating segment and the terminating segment; and
along the first direction, a length of the first sub-adhesive member is L3 mm, the length of the first segment is L2 mm, and 0 ≤ L3 - L2 ≤ 3.

8. The secondary battery according to claim 6 or 7, **characterized in that** the first adhesive member comprises a plurality of second sub-adhesive members;
the plurality of second sub-adhesive members are sequentially arranged on the first surface along the winding direction of the first segment, and adjacent second sub-adhesive members are bonded to each other; and
along the winding direction of the first segment, the second sub-adhesive member at an arrangement starting end is bonded to the first sub-adhesive member on the terminating segment, and along the direction perpendicular to the first surface, the projection of the second sub-adhesive member at an arrangement terminal end partially overlaps a projection of the second adhesive member.

9. The secondary battery according to any one of claims 1 to 8, **characterized in that** the first adhesive member and the second adhesive member are adhesive tapes.

10. The secondary battery according to any one of claims 1 to 9, **characterized in that** the first segment comprises a first straight segment, a first curved segment, a second straight segment, and a second curved segment that are connected;
the first straight segment and the second straight segment are oppositely arranged in a second direction, the first curved segment and the second curved segment are both connected between the first straight segment and the second straight segment, and the first curved segment and the second curved segment are oppositely arranged in a third direction; and
the second adhesive member is disposed on the first straight segment or the second straight segment, and the first direction, the second direction, and the third direction are mutually perpendicular to each other.

11. The secondary battery according to any one of claims 1 to 10, **characterized in that** a peel strength between the separator and the first electrode plate or the second electrode plate is 8 N/m to 12 N/m.

12. The secondary battery according to any one of claims 1 to 11, **characterized in that** the first adhesive member is a single-sided adhesive tape with adhesion on only one side, and the single-sided adhesive tape comprises a first substrate layer and a first binder layer coated on one side of the first substrate layer.

13. The secondary battery according to any one of claims 1 to 11, **characterized in that** the second adhesive member is a double-sided adhesive tape with adhesion on both sides, the double-sided adhesive tape comprises a second substrate layer and second bonding layers coated on both sides of the second substrate layer, and the second bonding layers are binder layers and/or hot melt adhesive layers.

14. The secondary battery according to any one of claims 1 to 13, **characterized in that** the housing is a packaging bag.

15. The secondary battery according to any one of claims 1 to 14, **characterized in that** the first electrode plate is a cathode electrode plate, and the second electrode plate is an anode electrode plate; and the first segment has an active material layer disposed only on the first surface, and the active material layer is disposed on the first surface of the coating segment.

16. The secondary battery according to any one of claims 1 to 15, **characterized in that** the second adhesive member is used for fixing the terminating segment.

17. An electronic device, **characterized in that** the electronic device comprises the secondary battery according to any one of claims 1 to 16.
